# EUROPÄISCHE PATENTSCHRIFT

(11) **EP 1 219 851 B1**
(45) Veröffentlichungstag und Bekanntmachung des Hinweises auf die Patenterteilung: **11.10.2006**
(21) Anmeldenummer: 01250002.1
(22) Anmeldetag: 02.01.2001
(51) Int. Cl.: F16D 65/16

(54) **Hydraulische Bremsanlage für Fahrzeuge**
Hydraulic brake system for vehicles
Système de freinage hydraulique pour véhicules

(43) Veröffentlichungstag der Anmeldung: 03.07.2002
(73) Patentinhaber: Ford Global Technologies, Inc., Dearborn, MI 48126-2490 (US)
(72) Erfinder: Mohr, Christian, 54290 Trier (DE); Odermatt, Manfred, 53773 Hennef/Sieg (DE)
(74) Vertreter: Bonsmann, Manfred

(56) Entgegenhaltungen:
- GB-A- 1 280 253
- US-A- 3 476 221
- US-A- 3 502 004
- US-A- 5 480 847
- PATENT ABSTRACTS OF JAPAN vol. 003, no. 158 (M-086), 25. Dezember 1979 (1979-12-25) & JP 54 137573 A (AISIN SEIKI CO LTD), 25. Oktober 1979 (1979-10-25)

## Beschreibung

Die Erfindung bezieht sich auf eine hydraulische Bremsanlage für Fahrzeuge mit wenigstens einer zur Bremsbetätigung vorgesehenen Bremszylinderanordnung, in der wenigstens ein Zylinder mit einem von unter Druck stehendem Bremsfluid beaufschlagbaren Kolben angeordnet ist.

Es ist bekannt, bei hydraulischen Bremsanlagen zwischen dem Kolben und dem Zylinder wirksame Abdichtorgane vorzusehen, mittels derer ein Austreten des Bremsfluids aus der Bremszylinderanordnung verhindert wird. Beispiele hierfür stellen die EP 0 586 995 B1, die EP 0 510 542 A1 oder die WO 00/00916 dar.

Für den Betrieb der Bremsanlage werden üblicherweise hygroskopische Bremsfluide eingesetzt, die stark wasseranziehend sind. Neu eingeführte Bremsfluide weisen einen hohen Siedepunkt auf. Ist der Siedepunkt des Bremsfluid hoch, hat dies zur Folge, daß auch bei starker Erwärmung des Bremsfluids durch den Bremsvorgang, beispielsweise im Bereich einer Bremsscheibe, keine Dampfblasenbildung auftritt und eine sichere Betätigung der Bremsen, d.h., die volle Übertragung des Bremspedaldrucks auf die Bremsen, gewährleistet ist. Die bekannten Abdichtorgane zwischen Kolben und Zylinder verhindern zwar einen Austritt des Bremsfluids aus der hydraulischen Bremsanlage, verhindern jedoch nicht oder nicht in ausreichendem Maße einen Eintritt von Feuchtigkeit bzw. Wasser von außen in das Bremsfluid. Ein Eintritt von Wasser bzw. Feuchtigkeit in das Bremsfluid hat zur Folge, daß der Siedepunkt des Bremsfluids niedriger wird, derart, daß sich bei einer starken Erwärmung des Bremsfluids infolge eines Bremsvorganges Dampfblasen im Bremsfluid bilden können. Die unerwünschte Folge kann durch den Fahrer des Fahrzeugs zunächst durch einen höheren Bremspedaldruck kompensiert werden. Insbesondere bei längeren Gefällestrecken und der damit verbundenen langen Bremsdauer kann es jedoch dazu kommen, daß das Bremssystem versagt, weil der hydraulische Bremsdruck infolge Dampfblasenbildung nicht mehr an die Bremsen übertragen werden kann.

Die Betriebsanleitungen von Kraftfahrzeugen schreiben zur Vermeidung vorstehenden Nachteiles vor, daß das Bremsfluid in bestimmten Abständen durch neues Bremsfluid zu ersetzen ist, welches einen so hohen Siedepunkt aufweist, daß die unerwünschte Dampfblasenbildung bei Bremsvorgängen nicht auftreten kann. Der Austausch von Bremsfluid ist zeit- und kostenaufwendig. Unterbleibt der regelmäßige Austausch von "gealtertem" Bremsfluid, so hat dies ein nicht unerhebliches Risiko sowohl für die Insassen des betreffenden Kraftfahrzeuges als auch für andere Verkehrsteilnehmer zur Folge.

Aus der US 54 80 847 ist es bekannt, den Kolben einer hydraulischen Bremsanlage der eingangs genannten Art durchgängig aus unglasiertem Keramikwerkstoff auszubilden, um eine Dampfblasenbildung in der Bremsflüssigkeit dadurch zu verringern, dass Feuchtigkeit aus der Bremsflüssigkeit in den Kolbenkörper absorbiert wird. Diese Maßnahme ist bei herkömmlichen, aus Metall bestehenden Kolben hydraulischer Bremsanlagen nicht anwendbar.

Vor diesem Hintergrund liegt der Erfindung die Aufgabe zugrunde, Maßnahmen vorzusehen, mittels derer bei aus metallischen Komponenten bestehenden Bremszylinderanordnungen über lange Zeit ein Absinken des Siedepunktes des Bremsfluids von Bremsanlagen verringert und möglichst ganz verhindert wird, so daß die Wechselintervalle für das Bremsfluid erheblich verlängert werden oder ganz entfallen können.

Diese Aufgabe wird durch eine hydraulische Bremsanlage für Fahrzeuge mit den Merkmalen des Patentanspruches 1 und des unabhängigen Patentanspruches 4 gelöst. Vorteilhafte Ausgestaltungen sind in den Unteransprüchen enthalten.

Die hydraulische Bremsanlage für Fahrzeuge enthält demnach wenigstens eine zur Bremsbetätigung vorgesehene Bremszylinderanordnung, in der wenigstens ein Zylinder mit einem von unter Druck stehendem Bremsfluid beaufschlagbaren Kolben angeordnet ist, wobei die Bremszylinderanordnung ein in dem Bereich zwischen Kolben und Zylinder wirksames, wasser- bzw. feuchtigkeitsbindendes Medium aufweist, welches entweder in Form einer eine Emulgierung hemmenden Beschichtung aufgebracht ist. Es kann auch vorgesehen sein, dass das Medium in einer in der Mantelfläche des Kolbens und/oder des Zylinders angeordneten umlaufenden Nut vorgesehen ist. Bei dem Medium kann es sich beispielsweise um einen feuchtigkeit- bzw. wasserbindenden oder abweisenden Festkörper nach Art eines Dichtrings um ein schaumförmig ausgebildetes entsprechendes Medium oder um eine Beschichtung handeln, die eine Emulgierung hemmt. Es liegt auch im Rahmen der Erfindung, wenn ein herkömmlicher Dichtring zusätzlich zu seiner Abdichtfunktion als feuchtigkeit- bzw. wasserbindender oder abweisender Dichtring ausgebildet ist.

Der Erfindung liegt der Gedanke zugrunde, daß insbesondere im Bereich der Bremszylinderanordnung die Gefahr besteht, daß Feuchtigkeit bzw. Wasser (beispielsweise in Form von Spritzwasser) in das Bremsfluid eintreten kann. Mit der erfindungsgemäßen Maßnahme wird demgegenüber das in der Bremsanlage enthaltene Bremsfluid wirkungsvoll sowohl gegen einen Einzug von Feuchtigkeit aus der Umgebung als auch gegen einen Eintritt von Feuchtigkeit am abzubremsenden Rad, etwa durch Spritzwasser, geschützt.

Wenn das wasser- bzw. feuchtigkeitbindende Medium in Form einer eine Emulgierung hemmenden Beschichtung ausgebildet ist, so kann diese Beschichtung auf den einander zugewandten Bereichen der Mantelfläche des Kolbens und/oder der Innenseite des Zylinders und auch auf wenigstens einer Stirnseite des Kolbens vorgesehen sein. Durch eine solche Beschichtung bzw. solche Beschichtungen wird der Spalt zwischen Zylinder und Kolben wasserfrei gehalten und ein Kapillareffekt in diesem "kritischen" Bereich unterbunden. Auf diese Weise wird zwischen den relativ zueinander bewegbaren Komponenten der Bremszylinderanordnung zum einen der für die Funktion erforderliche Ringspalt aufrechterhalten, andererseits wird aber eine Förderung von Wasser bzw. Feuchtigkeit über diesen Bereich der Bremsanlage von außen her in das hygroskopische Bremsfluid weitgehend vermieden bzw. völlig unterbunden.

Durch die erfindungsgemäß vorgesehenen Maßnahmen wird ein Eintritt von Wasser bzw. Feuchtigkeit im Bereich der Bremszylinderanordnung in das Bremsfluid stark verringert bzw. völlig unterbunden, mit der Folge, daß der Siedepunkt des hygroskopischen Bremsfluids über lange Zeit im wesentlichen unverändert bleibt, wodurch die Wechselintervalle für das in der Bremsanlage enthaltene Bremsfluid beträchtlich verlängert werden können. Dadurch können die Betriebskosten eines Fahrzeugs infolge der größeren oder im Idealfall über die gesamte Lebensdauer des Fahrzeugs überhaupt nicht mehr erforderlichen Bremsfluidwechselintervalle reduziert werden.

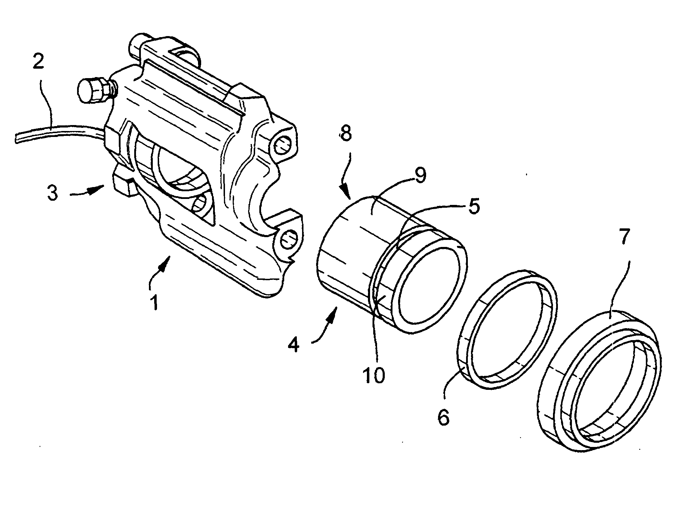

Die Erfindung wird nachfolgend anhand des in der Zeichnung schematisch dargestellten Ausführungsbeispiels näher erläutert. Die Figur zeigt eine schematische Darstellung von Teilen einer Bremszylinderanordnung mit einem darin bewegbar angeordneten Bremskolben.

Eine hydraulische Bremsanlage für Fahrzeuge weist in bekannter Weise ein von dem Fahrer des Fahrzeugs betätigbares Bremspedal (nicht dargestellt) und eine - üblicherweise in Tandembauweise ausgebildete - ebenfalls nicht dargestellte Hauptbremszylinderanordnung auf. Zwischen dem Bremspedal und der Hauptbremszylinderanordnung kann zusätzlich eine Bremskraftverstärkeranordnung (ebenfalls nicht dargestellt) vorgesehen sein. Weiterhin sind von der Hauptbremszylinderanordnung zu den Bremszylindern der einzelnen Räder führende, mit Bremsfluid beaufschlagbare Bremsleitungen vorgesehen. Oberhalb der Hauptbremszylinderanordnung ist ein Bremsfluid-Ausgleichsbehälter (ebenfalls nicht dargestellt) angebracht. Die Kraft, mit der das Bremspedal auf den Kolben in der Hauptbremszylinderanordnung gedrückt wird, hat einen Druckaufbau in dem Bremsfluid zur Folge. Dieser bewirkt über die Bremsleitungen in bekannter Weise Spannkräfte bzw. Anpreßkräfte der Bremsen. Von der vorstehend beschriebenen, allgemein bekannten hydraulischen Bremsanlage ist in der Zeichnung lediglich ein Teil der Bremszylinderanordnung dargestellt.

Ein Bremssattel 1 steht mit der (nicht dargestellten) Hauptbremszylinderanordnung über eine mit Bremsfluid gefüllte Bremsleitung 2 in Verbindung. Der Bremssattel 1 weist ein schematisch dargestelltes Kolbengehäuse 3 mit einem (nicht im einzelnen dargestellten) Zylinder zur Aufnahme eines in diesem hin- und herbewegbar angeordneten Kolbens 4 auf. Der Kolben weist in einer Mantelfläche eine umlaufende Nut 5 auf, in die ein Dichtring 6 eingelassen ist. Der Dichtring 6 ist als feuchtigkeits- bzw. wasserbindender oder abweisender Dichtring ausgebildet. Es kann auch vorgesehen sein, daß in der Nut ein zum Aufsaugen des Demulgators geeignetes Material vorgesehen ist, derart, daß ein umlaufend angeordnetes Fluidreservoir gebildet wird, welches dem Eintritt von Feuchtigkeit entgegenwirkt. Zur Verhinderung eines Eintritts von Staub oder anderer Fremdkörper in die Bremszylinderanordnung weist der Kolben 4 weiterhin eine Staubmanschette 7 auf.

Die Stirnenden sowie die Mantelfläche des axial verschiebbaren Kolbens 4 können alternativ zu dem in der Nut 5 angeordneten, wasser- bzw. feuchtigkeitbindenden oder abweisenden Medium oder auch zusätzlich dazu mit einer eine Emulgierung hemmenden Beschichtung 8 versehen sein. Bei dem dargestellten Ausführungsbeispiel ist die Beschichtung auf der Mantelfläche in zwei Abschnitten 9 und 10 beiderseits der Umfangsnut aufgebracht. Durch Wirkung der Beschichtung bleibt zwischen den relativ zueinander bewegbaren Komponenten der Bremszylinderanordnung der für die Betätigung erforderliche Freiraum aufrecht erhalten, während gleichzeitig verhindert wird, daß von außen her Feuchtigkeit bzw. Wasser in das Bremsfluid gelangen kann, mit der Folge, daß der bei neu eingeführtem Bremsfluid zunächst hohe Siedepunkt nicht durch eintretende Feuchtigkeit bzw. Wasser abgesenkt wird.

Die an der Innenseite des Zylinders und/oder an der Mantelfläche und ggf. an den Stirnenden des Kolbens 4 aufzubringende Beschichtung mit einer eine Emulgierung hemmenden Eigenschaft wird vorzugsweise während der Herstellung dieser Komponenten aufgebracht, so daß der Montageaufwand bei Herstellung der Bremszylinderanordnung gegenüber dem Stand der Technik unverändert bleibt und somit keine zusätzlichen Kosten entstehen.

Bei Verschiebung des Kolbens 8 durch Wirkung des Bremsfluids in der Bremsleitung 2 werden (nicht dargestellte) Bremsbakken mit Bremsbelägen beispielsweise gegen eine Bremsscheibe (nicht dargestellt) angepreßt. Da durch die erfindungsgemäßen Maßnahmen ein Eintritt von Wasser bzw. Feuchtigkeit in das Bremsfluid gegenüber dem Stand der Technik verringert bzw. gänzlich ausgeschlossen wird, bleibt der Siedepunkt hoch, so daß auch bei starker Erwärmung des Bremsfluids im Bereich der Bremszylinderanordnung keine Bildung von Dampfblasen auftritt und dadurch der hydraulische Druck auch während längerer Bremsvorgänge sicher auf die Bremsen übertragen werden kann.

## Patentansprüche

1. Hydraulische Bremsanlage für Fahrzeuge mit wenigstens einer zur Bremsbetätigung vorgesehenen Bremszylinderanordnung, in der wenigstens ein Zylinder mit einem von unter Druck stehendem Bremsfluid beaufschlagbaren Kolben (4) angeordnet ist und die Bremszylinderanordnung ein in dem Bereich zwischen Kolben (4) und Zylinder wirksames, wasser- bzw. feuchtigkeitsbindendes Medium aufweist, **dadurch gekennzeichnet, daß** das Medium in Form einer eine Emulgierung hemmenden Beschichtung (8) aufgebracht ist.

2. Hydraulische Bremsanlage nach Anspruch 1, **dadurch gekennzeichnet, daß** die eine Emulgierung hemmende Beschichtung auf einander zugewandten Bereichen der Mantelfläche des Kolbens (4) und/oder der Innenseite des Zylinders aufgebracht ist.

3. Hydraulische Bremsanlage nach Anspruch 1 oder 2, **dadurch gekennzeichnet, daß** die eine Emulgierung hemmende Beschichtung auf wenigstens einer Stirnseite des Kolbens (4) aufgebracht ist.

4. Hydraulische Bremsanlage für Fahrzeuge mit wenigstens einer zur Bremsbetätigung vorgesehenen Bremszylinderanordnung, in der wenigstens ein Zylinder mit einem von unter Druck stehendem Bremsfluid beaufschlagbaren Kolben (4) angeordnet ist und die Bremszylinderanordnung ein in dem Bereich zwischen Kolben (4) und Zylinder wirksames, wasser- bzw. feuchtigkeitsbindendes Medium aufweist, **dadurch gekennzeichnet, daß** die Mantelfläche des Kolbens (4) eine umlaufende Nut (5) aufweist, und das Medium in der Nut (5) angeordnet ist.

5. Hydraulische Bremsanlage nach Anspruch 4, **dadurch gekennzeichnet, daß** die Innenseite des Zylinders eine umlaufende Nut aufweist, und das Medium in der Nut angeordnet ist.

6. Hydraulische Bremsanlage nach Anspruch 4 oder 5, **dadurch gekennzeichnet, daß** das Medium als feuchtigkeits-bzw. wasserbindender oder abweisender Dichtring (6) ausgebildet ist.

7. Hydraulische Bremsanlage nach einem der Ansprüche 1 bis 6, **dadurch gekennzeichnet, daß** das Medium wasser- bzw. feuchtigkeitsabweisend ausgebildet ist.

## Claims

1. A hydraulic braking system for vehicles comprising at least one brake cylinder arrangement which is provided for brake actuation and in which there is arranged at least one cylinder having a piston (4) which can be acted upon by brake fluid under pressure, and the brake cylinder arrangement has a water- or moisture-absorbent medium which is operative in the region between the piston (4) and the cylinder, **characterised in that** the medium is applied in the form of a coating (8) inhibiting emulsification.

2. A hydraulic braking system according to claim 1 **characterised in that** the coating inhibiting emulsification is applied to mutually facing regions of the peripheral surface of the piston (4) and/or the inside of the cylinder.

3. A hydraulic braking system according to claim 1 or claim 2 **characterised in that** the coating inhibiting emulsification is applied to at least one end of the piston (4).

4. A hydraulic braking system for vehicles comprising at least one brake cylinder arrangement which is provided for brake actuation and in which there is arranged at least one cylinder having a piston (4) which can be acted upon by brake fluid under pressure, and the brake cylinder arrangement has a water- or moisture-absorbent medium which is operative in the region between the piston (4) and the cylinder, **characterised in that** the peripheral surface of the piston (4) has a peripherally extending groove (5) and the medium is arranged in the groove (5).

5. A hydraulic braking system according to claim 4 **characterised in that** the inside of the cylinder has a peripherally extending groove and the medium is arranged in the groove.

6. A hydraulic braking system according to claim 4 or claim 5 **characterised in that** the medium is in the form of a moisture- or water-absorbent or repellent sealing ring (6).

7. A hydraulic braking system according to one of claims 1 to 6 **characterised in that** the medium is adapted to be water- or moisture-repellent.

## Revendications

1. Système de freinage hydraulique pour véhicules, avec au moins un ensemble de cylindre de frein prévu pour l'actionnement du frein et dans lequel est disposé au moins un cylindre pourvu d'un piston (4) pouvant être sollicité par du liquide de frein sous pression, l'ensemble de cylindre de frein présentant un moyen liant l'eau et/ou l'humidité qui est actif entre le piston (4) et le cylindre, **caractérisé en ce que** le moyen est appliqué sous la forme d'un revêtement (8) empêchant l'émulsification.

2. Système de freinage hydraulique selon la revendication 1, **caractérisé en ce que** le revêtement empêchant l'émulsification est appliqué sur des régions en vis-à-vis de la face d'enveloppe du piston (4) et/ou de la face intérieure du cylindre.

3. Système de freinage hydraulique selon la revendication 1 ou 2, **caractérisé en ce que** le revêtement empêchant l'émulsification est appliqué sur au moins un côté frontal du piston (4).

4. Système de freinage hydraulique pour véhicules, avec au moins un ensemble de cylindre de frein prévu pour l'actionnement du frein et dans lequel est disposé au moins un cylindre pourvu d'un piston (4) pouvant être sollicité par du liquide de frein sous pression, l'ensemble de cylindre de frein présentant un moyen liant l'eau et/ou l'humidité qui est actif entre le piston (4) et le cylindre, **caractérisé en ce que** la face d'enveloppe du piston (4) présente une rainure entourante (5), et le moyen est disposé dans la rainure (5).

5. Système de freinage hydraulique selon la revendication 4, **caractérisé en ce que** la face intérieure du cylindre présente une rainure entourante, et le moyen est disposé dans la rainure.

6. Système de freinage hydraulique selon la revendication 4 ou 5, **caractérisé en ce que** le moyen est réalisé sous la forme d'une bague d'étanchéité (6) repoussant ou liant l'humidité et/ou l'eau.

7. Système de freinage hydraulique selon l'une des revendications 1 à 6, **caractérisé en ce que** le moyen est conçu repoussant l'eau et/ou l'humidité.
